# EUROPÄISCHE PATENTSCHRIFT

(11) **EP 3 690 690 B1**
(45) Veröffentlichungstag und Bekanntmachung des Hinweises auf die Patenterteilung: **26.01.2022**
(21) Anmeldenummer: 19154375.0
(22) Anmeldetag: 30.01.2019
(51) Int. Cl.: H04L 9/32, G06F 21/44, G06F 21/52, G06F 21/57

(54) **VERFAHREN ZUM PRÜFEN EINER VALIDITÄT VON DATEN UND COMPUTERIMPLEMENTIERTE VORRICHTUNG ZUM VERARBEITEN VON DATEN**
METHOD FOR TESTING A VALIDITY OF DATA AND COMPUTER IMPLEMENTED DEVICE FOR PROCESSING DATA
PROCÉDÉ DE VÉRIFICATION D'UNE VALIDITÉ DES DONNÉES ET DISPOSITIF MIS EN UVRE SUR ORDINATEUR DESTINÉ AU TRAITEMENT DES DONNÉES

(43) Veröffentlichungstag der Anmeldung: 05.08.2020
(73) Patentinhaber: Siemens Aktiengesellschaft, 80333 München (DE)
(72) Erfinder: Aschauer, Hans, 81829 München (DE); Falk, Rainer, 85586 Poing (DE); Feist, Christian Peter, 80689 München (DE); Zeschg, Thomas, 81543 München (DE)

(56) Entgegenhaltungen:
- US-A1- 2012 311 314
- US-A1- 2015 012 737
- US-A1- 2018 032 734
- US-A1- 2018 165 455
- US-A1- 2018 365 424

## Beschreibung

Die vorliegende Erfindung betrifft ein Verfahren und ein Computerprogrammprodukt zum Prüfen einer Validität von Daten sowie eine computer-implementierte Vorrichtung zum Verarbeiten von Daten.

Das technische Gebiet der vorliegenden Erfindung betrifft das Prüfen einer Validität von Daten, insbesondere das Prüfen der Validität von Daten auf computer-implementierten Vorrichtungen.

Eingebettete Geräte als Beispiele für computer-implementierte Vorrichtungen, insbesondere Steuergeräte, Industrie-PCs, IoT- und Edge-Geräte (IoT; Internet-of-Things) übernehmen in einem industriellen Kontext relevante Aufgaben, wie beispielsweise das Steuern oder Überwachen von technischen Prozessen. Hierbei führen sie oft sicherheitskritische Funktionen aus. Zudem werden die Geräte zunehmend vernetzt, beispielsweise zur Fernsteuerung und Diagnose oder zur Analyse als Basis für eine anschließende Optimierung eines Prozesses.

Da eingebettete Geräte in industriellen Systemen oft über einen langen Zeitraum, beispielsweise 10 bis 30 Jahre, im Feld verwendet werden, sind diese sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, wie beispielsweise durch die Unterstützung von nachladbaren Applikationen (Software-Apps, Software-Applikationen).

Um diese Flexibilität zu gewährleisten, ohne die Performanz und benötigten Ressourcen für die sicherheitskritischen Funktionen zu beeinträchtigen, werden derzeit Ansätze zur flexiblen Hardware-Nutzung untersucht.

Ein solcher Ansatz umfasst die Verwendung von zur Laufzeit austauschbaren Hardwarefunktionen (Hardware-Apps, Konfigurations-Beschreibungen) mittels partieller Rekonfiguration in Digital-Bausteinen, wie einem FPGA ("Field Programmable Gate Array"), einem CPLD ("Complex Programmable Logic Device") oder SoCs ("System on Chips"), sowie die Verwendung von sogenannten virtuellen FPGAs in ASICs/ASSPs ("Application-Specific Integrated Circuit/"Application-Specific Standard Products"), also zur Laufzeit rekonfigurierbare Komponenten eines ASICs/ASSPs. Bei diesem Ansatz wird zumindest eine Hardware-App in einen rekonfigurierbaren Teil des Digital-Bausteins geladen.

Durch die Vernetzung sind die eingebetteten Geräte zunehmend Angriffen ausgesetzt. Software-Applikationen bestehen typischerweise aus mehreren Komponenten, wie beispielsweise Open-Source-Bibliotheken, und können Sicherheitslücken enthalten.

Zudem bieten sich durch die vorgesehene Flexibilität für einen Angreifer neue Möglichkeiten an, die entsprechenden Mechanismen für Software-/Hardware-Apps zu schadhaften Zwecken zu missbrauchen, wie insbesondere das Installieren und Ausführen eigener schadhafter Software-/Hardware-Apps, oder beispielsweise die Verwendung von zulässigen Hardware-Apps durch unautorisierte Software-Apps.

Somit besteht ein Bedarf dahingehend, zumindest diese Möglichkeiten des Missbrauchs von Hardware-Apps einzuschränken oder zu unterbinden.

Die Druckschrift US 2018/032734 A1 offenbart ein Computersystem, welches sicher gebootet wird, indem eine Boot-Firmware ausgeführt wird, um einen Bootloader zu lokalisieren und den Bootloader mit einem ersten Schlüssel, welcher der Boot-Firmware zugeordnet ist, zu verifizieren. Nach der Verifizierung des Bootloaders führt das Computersystem den Bootloader aus, um einen System-Software-Kernel und einen sicheren Boot-Verifizierer mithilfe eines zweiten Schlüssels zu verifizieren, der dem Bootloader zugeordnet ist. Der sichere Boot-Verifizierer wird dann ausgeführt, um die verbleibenden ausführbaren Softwaremodule zu verifizieren, die während des Bootens geladen werden sollen, indem ein dritter Schlüssel, der dem sicheren Boot-Verifizierer zugeordnet ist, und ein vierter Schlüssel, der einem Benutzer des Computersystems zugeordnet ist, verwendet werden.

Die Druckschrift US 2018/365424 A1 stellt Mechanismen zum Booten eines Serviceprozessors bereit. Mit diesen Mechanismen führt der Serviceprozessor einen sicheren Bootvorgang einer sicheren Boot-Firmware aus, um einen Betriebssystemkern des Serviceprozessors zu booten. Die sichere Boot-Firmware zeichnet erste Messungen eines Codes, der durch die sichere Boot-Firmware beim Ausführen des Bootvorgangs ausgeführt wird, in einem oder mehreren Registern eines manipulationsresistenten sicheren vertrauenswürdigen dedizierten Mikroprozessors des Serviceprozessors auf. Der im Serviceprozessor ausgeführte Betriebssystemkern aktiviert ein Integritätsverwaltungsteilsystem des Betriebssystemkerns, welches zweite Messungen der vom Betriebssystemkern ausgeführten Software in einem oder mehreren Registern des manipulationsresistenten sicheren vertrauenswürdigen dedizierten Mikroprozessors aufzeichnet.

Die Druckschrift US 2015/012737 A1 offenbart ein Verfahren zum sicheren Booten eines Zielprozessors in einem Zielsystem von einer sicheren "Root of Trust". Das Verfahren umfasst ein Berechnen eines Nachrichtenauthentifizierungscodes aus dem Bootcode, der dem Zielprozessor bereitgestellt wird, umfassend einen verschleierten Algorithmus zum Wiederherstellen des Nachrichtenauthentifizierungscodes in dem Zielprozessor, ein Versorgen des Zielprozessors mit dem Bootcode, ein Ausführen des Bootcodes zum Wiederherstellen des Nachrichtenauthentifizierungscodes im Zielprozessor, ein Versorgen des Nachrichtenauthentifizierungscodes zurück zu der "Root of Trust", ein Vergleichen des zurückgegebenen Nachrichtenauthentifizierungscodes mit dem in der "Root of Trust" erzeugten Nachrichtenauthentifizierungscode, ein Fortsetzen der Ausführung der Bootcodedaten, falls der zurückgegebene Nachrichtenauthentifizierungscode mit dem Nachrichtenauthentifizierungscode übereinstimmt und ein Anwenden zumindest einer Sanktion auf das Zielsystem, falls der zurückgegebene Nachrichtenauthentifizierungscode nicht mit dem in der "Root of Trust" erzeugten Nachrichtenauthentifizierungscode übereinstimmt.

Die Druckschrift US 2018/165455 A1 offenbart Techniken zum Aufrechterhalten einer sicheren Ausführungsumgebung auf einem Server. Beispielsweise umfasst der Server einen nichtflüchtigen Speicher, der Firmware speichert, eine programmierbare Sicherheitslogik, die mit dem nichtflüchtigen Speicher gekoppelt ist, eine Adaptervorrichtung, die mit der programmierbaren Sicherheitslogik gekoppelt ist, und einen Prozessor, der kommunikativ mit dem nichtflüchtigen Speicher über die programmierbare Sicherheitslogik gekoppelt ist. Die Adaptervorrichtung und/oder die programmierbare Sicherheitslogik können die Firmware im nichtflüchtigen Speicher, während der Prozessor und/oder ein Baseboard-Management-Controller (BMC) in einem "Power-Reset"-Zustand gehalten werden, verifizieren, den Prozessor und den BMC vom dem "Reset"-Zustand freigeben, um den Prozessor und den BMC, nachdem die Firmware überprüft wurde, zu booten, und dann die Kommunikationen zwischen dem Prozessor und dem BMC deaktivieren und zumindest einige Anfragen zum Schreiben in den nichtflüchtigen Speicher durch den Prozessor oder den BMC ablehnen.

Vor diesem Hintergrund besteht eine Aufgabe der vorliegenden Erfindung darin, die Sicherheit bei der Verarbeitung von Daten auf einer computer-implementierten Vorrichtung zu verbessern.

Gemäß einem ersten Aspekt wird ein Verfahren zum Prüfen einer Validität von Daten für eine computer-implementierte Vorrichtung, die zumindest einen Digital-Baustein mit zumindest einem durch zumindest eine Konfigurations-Beschreibung rekonfigurierbaren Teil umfasst, vorgeschlagen. Das Verfahren weist die folgenden Schritte auf:
a) Bereitstellen, während einer geschützten Betriebsphase der computer-implementierten Vorrichtung, einer Prüfinformation zur Angabe von zulässigen in den rekonfigurierbaren Teil des Digital-Bausteins ladbaren Konfigurations-Beschreibungen, und
b) Prüfen der Validität einer in den rekonfigurierbaren Teil des Digital-Bausteins zu ladenden bestimmten Konfigurations-Beschreibung durch Vergleichen der in den rekonfigurierbaren Teil des Digital-Bausteins zu ladenden bestimmten Konfigurations-Beschreibung mit der Prüfinformation.

Mittels des vorliegenden Verfahrens ist es durch Schritt a) möglich, während der geschützten Betriebsphase unter Verwendung der Prüfinformation festzulegen, welche Konfigurations-Beschreibungen (Hardware-Apps) die Validität aufweisen, also zulässig sind, um überhaupt während einer regulären Betriebsphase der computer-implementierten Vorrichtung in den rekonfigurierbaren Teil des Digital-Bausteins geladen oder ausgeführt oder instanziiert zu werden. Im Anschluss ist es im Schritt b) möglich, zu überprüfen, ob eine in den rekonfigurierbaren Teil des Digital-Bausteins zu ladende bestimmte Konfigurations-Beschreibung die Eignung besitzt, also valide ist, um in den rekonfigurierbaren Teil des Digital-Bausteins geladen zu werden.

Dies hat den technischen Effekt, dass während der regulären Betriebsphase der computer-implementierten Vorrichtung somit nur eine oder mehrere Konfigurations-Beschreibungen in den rekonfigurierbaren Teil des Digital-Bausteins geladen werden können, welche als Ergebnis der Prüfung eine entsprechende Validität aufweisen, also vertrauenswürdig sind. Dabei kann weiterhin erreicht werden, dass bestimmte Konfigurations-Beschreibungen nur für bestimmte rekonfigurierbare Teile des Digital-Bausteins zulässig sind.

Somit wird das Installieren, das Laden einer nicht-validen Konfigurations-Beschreibung in den rekonfigurierbaren Teil des Digital-Bausteins und das Verwenden von schadhaften, nicht-validen Konfigurations-Beschreibungen selbst dann verhindert, wenn eine Software-Applikation (Software-App) oder andere Softwarekomponenten der computer-implementierten Vorrichtung während der regulären Betriebsphase kompromittiert werden. Bei einer vorhandenen Schwachstelle in der Software-Applikation oder in einer Software oder in einer der Softwarekomponenten der computer-implementierten Vorrichtung kann lediglich eine andere für den rekonfigurierbaren Teil des Digital-Bausteins zulässige, vertrauenswürdige Konfigurations-Beschreibung geladen werden.

Dies hat den Vorteil, dass durch das vorliegende Verfahren ein erhöhter und flexiblerer Schutz vor schadhafter Nutzung durch einen Angreifer für die computer-implementierte Vorrichtung, als auch für den rekonfigurierbaren Teil des Digital-Bausteins, erreicht wird.

Unter dem Prüfen einer Validität wird insbesondere eine Prüfung verstanden, bei der geprüft wird, ob eine Konfigurations-Beschreibung valide ist, um in den rekonfigurierbaren Teil des Digital-Bausteins geladen zu werden. Der Begriff "valide" kann auch als zulässig, gültig oder vertrauenswürdig verstanden werden.

Die computer-implementierte Vorrichtung umfasst vorzugsweise eine Software-Laufzeitumgebung, die dazu eingerichtet ist, eine Umgebung zum Ausführen der Software bereitzustellen. Die Software ist beispielsweise ein Betriebssystem, welches innerhalb der Software-Laufzeitumgebung ausgeführt wird, um die computer-implementierte Vorrichtung zu betreiben. Die Software-Laufzeitumgebung umfasst insbesondere die Software-Applikation und stellt eine Umgebung zur Verfügung, in weleher zumindest ein Digital-Baustein mit einer Konfigurations-Beschreibung betrieben werden kann. Eine Software-Applikation ist insbesondere ein vom Betriebssystem unabhängiges Programm, mit welchem verschiedene Anwendungen und Funktionen realisiert werden können.

Der Digital-Baustein ist insbesondere als ein FPGA ("Field Programmable Gate Array"), als ein CPLD ("Complex Programmable Logic Device") oder als ein virtueller FPGA ausgebildet. Der virtuelle FPGA ist vorzugsweise als ein ASIC/SoC ("Application-Specific Integrated Circuit", "System-on-a-Chip") ausgebildet, bei welchem ein oder mehrere rekonfigurierbare Teile beispielsweise herstellerseitig bereits innerhalb des Digital-Bausteins vorgesehen sind und zu einem späteren Zeitpunkt konfigurierbar sind. Der Digital-Baustein umfasst insbesondere zumindest einen rekonfigurierbaren Teil.

Die Software-Applikation ist insbesondere dazu eingerichtet, die den ihr zugeordneten rekonfigurierbaren Teil neu zu rekonfigurieren und diesen für bestimmte Zwecke zu verwenden, wie beispielsweise die Auslagerung von bestimmten Berechnungen in Hardware zur Entlastung einer CPU und/oder die Aufteilung komplexer Hardware in mehrere rekonfigurierbare Teile, um Ressourcen des Digital-Bausteins einsparen zu können.

Die Konfigurations-Beschreibung ist insbesondere ein Bitstream. Der Bitstream ist vorzugsweise eine Sequenz von Bits von bestimmter Länge. Der Bitstream umfasst beispielsweise einen Basis-Bitstream und einen oder mehrere partielle Bitstreams. Der Basis-Bitstream wird insbesondere dazu verwendet, alle Teile, welche den Digital-Baustein umfassen, also auch den zumindest einen rekonfigurierbaren Teil, einmalig initial zu konfigurieren. Der partielle Bitstream weist insbesondere Informationen zur Konfiguration eines bestimmten rekonfigurierbaren Teils des Digital-Bausteins auf und wird insbesondere dazu verwendet, den rekonfigurierbaren Teil des Digital-Bausteins beliebig oft zu rekonfigurieren. Die Konfigurations-Beschreibung kann auch als Hardware-Applikation bezeichnet werden, da diese innerhalb des Digital-Bausteins, wie dem FPGA, verwendet wird. Die Konfigurations-Beschreibung definiert insbesondere die Konfiguration des Digital-Bausteins vollständig (Basis-Bitstream) oder teilweise (partieller Bitstream).

Unter einem Rekonfigurieren des Digital-Bausteins wird insbesondere ein Rekonfigurieren des rekonfigurierbaren Teils des FPGAs (Digital-Bausteins) verstanden. Der rekonfigurierbare Teil ist insbesondere eine spezielle veränderbare Region, welche bei der Entwicklung des Digital-Bausteins innerhalb des Digital-Bausteins festgelegt wird. Das Rekonfigurieren als auch ein Konfigurieren umfassen ein Laden einer Digitalschaltung in den Digital-Baustein, wobei die Digitalschaltung innerhalb einer validen Konfigurations-Beschreibung angeordnet ist und somit Teil des Bitstreams ist. Die in einem rekonfigurierbaren Teil geladenen Digitalschaltungen lassen sich insbesondere zur Laufzeit neu konfigurieren (rekonfigurieren), ohne die restliche Digitalschaltung des Digital-Bausteins zu beeinflussen. Somit wird vorzugsweise eine valide Konfigurations-Beschreibung als partieller Bitstream für einen solchen rekonfigurierbaren Teil realisiert und zur Laufzeit geladen und/oder instanziiert, ohne dass dabei erforderlich ist, die restliche Digitalschaltung des Digital-Bausteins anzuhalten und/oder neu zu konfigurieren.

Weiterhin umfasst der Digital-Baustein insbesondere einen konfigurierbaren Teil. Vorzugsweise bildet der konfigurierbare Teil umfassend den Digital-Baustein aus. Der konfigurierbare Teil des Digital-Bausteins weist beispielsweise mehrere rekonfigurierbare Teile auf. Der konfigurierbare Teil umfasst zumindest den einen rekonfigurierbaren Teil. Insbesondere umfasst das Konfigurieren des konfigurierbaren Teils ein initiales Konfigurieren sowie ein Rekonfigurieren. Weiterhin kann der konfigurierbare Teil zu einem bestimmten Zeitpunkt unter Verwendung einer validen Konfigurations-Beschreibung initial konfiguriert werden.

Insbesondere wird das initiale Konfigurieren einmalig in der Fertigung oder bei jedem Gerätestart durchgeführt. Der bestimmte Zeitpunkt umfasst vorzugsweise einen Zeitpunkt nach der Produktion des Digital-Bausteins, vor der Verwendung des Digital-Bausteins, bei der erstmaligen Inbetriebnahme des Digital-Bausteins und/oder bei jedem Neustart der Vorrichtung. Letzterer Fall wird insbesondere bei FPGAs mit volatiler Speichertechnologie, wie beispielsweise SRAM ("Static randomaccess memory") verwendet.

Die ladbare Konfigurations-Beschreibung ist insbesondere eine solche Konfigurations-Beschreibung, welche für den rekonfigurierbaren Teil des Digital-Bausteins valide ist, während die zu ladende bestimmte Konfigurations-Beschreibung vorzugsweise entweder valide oder auch nicht-valide ist.

Unter dem Vergleichen wird vorzugsweise verstanden, dass die während der geschützten Betriebsphase der computer-implementierten Vorrichtung bereitgestellte Prüfinformation, welche Informationen über zumindest eine valide Konfigurations-Beschreibung aufweist, mit zumindest einer in den rekonfigurierbaren Teil des Digital-Bausteins zu ladenden bestimmten Konfigurations-Beschreibung auf Validität verglichen wird.

Die Prüfinformation ist als eine weiße Liste ausgebildet. Vorzugsweise ist die weiße Liste oder auch Whitelist oder auch Positivliste oder auch Ausnahmeliste eine Liste, bei welcher gleiche Elemente, wie kryptographische Hashwerte, zusammengefasst werden, welche vertrauenswürdig sind. Die weiße Liste enthält eine Liste an kryptographischen Hashwerten von Konfigurations-Beschreibungen, die in den rekonfigurierbaren Teil des Digital-Bausteins hineingeladen werden dürfen, also valide sind.

Vorzugsweise wird bei dem Bereitstellen der Prüfinformation mittels der weißen Liste während einer geschützten Betriebsphase ermittelt, welche zulässigen (validen) Konfigurations-Beschreibungen auf der computer-implementierten Vorrichtung vorliegen. Anschließend wird insbesondere eine weiße Liste von zulässigen Konfigurations-Beschreibungen gebildet und konfiguriert. Vorzugsweise wird dann die weiße Liste verriegelt, sodass diese in einer regulären Betriebsphase der computer-implementierten Vorrichtung selbst durch eine ausgeführte Software-Applikation unveränderbar ist.

Dies hat den Vorteil, dass während der regulären Betriebsphase somit nur eine Konfigurations-Beschreibung in den rekonfigurierbaren Teil des Digital-Bausteins geladen werden kann, welche explizit in der weißen Liste enthalten ist. Dies bedeutet insbesondere, dass während einer geschützten Betriebsphase der computer-implementierten Vorrichtung festgelegt oder ermittelt wird, welche Konfigurations-Beschreibungen in der regulären Betriebsphase überhaupt in den rekonfigurierbaren Teil ladbar sind. Somit kann nur eine Konfigurations-Beschreibung, welche zulässig ist, durch eine Software-Applikation auf der computer-implementierten Vorrichtung geladen und verwendet werden. Selbst wenn die Software-Applikation oder die Software des Betriebssystems der computer-implementierten Vorrichtung während der regulären Betriebsphase kompromittiert wird, so wird insbesondere verhindert, dass eine manipulierte Konfigurations-Beschreibung in den rekonfigurierbaren Teil geladen wird. Das bedeutet, wenn eine in der Software-Applikation vorhandene Schwachstelle ausgenutzt wird, so kann dennoch höchstens eine zulässige Konfigurations-Beschreibung geladen werden. Hierdurch wird ein erhöhter Schutz der computer-implementierten Vorrichtung, insbesondere des Digital-Bausteins, vor der Verwendung von unzulässigen und schadhaften Konfigurations-Beschreibungen erreicht.

Insbesondere ist die Prüfinformation als eine schwarze Liste ausgebildet. Vorzugsweise ist die schwarze Liste oder auch Blacklist oder auch Negativliste oder auch Sperrliste eine Liste, bei welcher beispielsweise gleiche Elemente, wie Namen, zusammengefasst werden, welche nicht-valide sind. Das Bereitstellen der Prüfinformation mittels einer schwarzen Liste erfolgt insbesondere dadurch, dass während einer geschützten Betriebsphase ermittelt wird, welche unzulässigen (nicht-validen) Konfigurations-Beschreibungen auf der computer-implementierten Vorrichtung vorliegen. Die Realisierung der weiteren Verfahrensschritte erfolgt insbesondere analog zu den Schritten der weißen Liste.

Vorzugsweise ist die Prüfinformation als eine Information ausgebildet, mittels welcher ein Vergleich oder ein Abgleich von zumindest einer in den rekonfigurierbaren Teil des Digital-Bausteins zu ladenden bestimmten Konfigurations-Beschreibung mit der Information aus der Prüfinformation durchführbar ist.

Der Hashwert ist insbesondere eine Bitfolge mit einer bestimmten Länge, beispielsweise 128 Bit, 160 Bit, 256 Bit, 384 Bit, oder auch 512 Bit. Der Hashwert lässt sich beispielsweise mittels einer Hashfunktion aus einer bestimmten Konfigurations-Beschreibung erzeugen oder berechnen. Die Hashfunktion bildet dabei die Konfigurations-Beschreibung auf den Hashwert mit fester Länge ab. Diese Abbildung ist vorzugsweise eindeutig. Eine solche Hashfunktion ist beispielsweise kollisionsresistent. Hierunter wird insbesondere verstanden, dass es nur mit stark erhöhtem Aufwand möglich ist, unterschiedliche Bitstreams zu finden, die den gleichen Hashwert ergeben. Der Hashwert eines bestimmten Bitstreams kann daher auch als "fingerprint" (Fingerabdruck) bezeichnet werden. Beispiele von Hashfunktionen, auch als Hash-Algorithmen bezeichnet, sind MD5, SHA-1, SHA-2 oder SHA-3. Beispielsweise bezeichnet SHA-256 den SHA-2 Hash-Algorithmus, wobei ein jeweiliger Hashwert eine Länge von 256 Bit aufweist. Ein Hashwert kann auch als kryptographischer Schlüssel genutzt werden. Hierbei wird insbesondere unter Verwendung des als Hashwert verwendeten Schlüssels eine Schlüsselableitungsfunktion, wie HMAC-SHA256, gebildet.

Gemäß dem ersten Aspekt ist die geschützte Betriebsphase der computer-implementierten Vorrichtung als eine erste geschützte Betriebsphase zur Bereitstellung der Prüfinformation im Voraus auf der computer-implementierten Vorrichtung und/oder als eine zweite geschützte Betriebsphase zur Bereitstellung der Prüfinformation zur Laufzeit der computer-implementierten Vorrichtung und als eine dritte geschützte Betriebsphase zur Bereitstellung der Prüfinformation in Abhängigkeit eines Informations-Pakets während einer Installation des Informations-Pakets ausgebildet.

In der dritten geschützten Betriebsphase wird insbesondere die Prüfinformation erst zum Zeitpunkt der Installation eines Informations-Pakets, welches beispielsweise ein Hardware-Paket und/oder ein Software-Paket umfasst, bereitgestellt. In diesem Fall wird die Prüfinformation direkt aus Informationen des Informations-Pakets ausgelesen und/oder generiert. Das Generieren der Prüfinformation umfasst insbesondere ein Erzeugen von Hashwerten aus den im Informations-Paket für den rekonfigurierbaren Teil vorhandenen validen Konfigurations-Beschreibungen. Das Informations-Paket ist vorzugsweise ein Datenpaket. Ein Software-Paket umfasst insbesondere eine Anzahl von Software-Applikationen, während ein Hardware-Paket insbesondere eine Anzahl von Konfigurations-Beschreibungen umfasst.

Vorzugsweise ist das Vorgehen in der dritten geschützten Betriebsphase zur Bereitstellung der Prüfinformation mit einer globalen weißen oder schwarzen Liste kombinierbar. Hierbei werden insbesondere bekannte, schadhafte (nicht-valide, unzulässige) Konfigurations-Beschreibungen in einer auf einer Datenbank gelisteten schwarzen Liste mit den Konfigurations-Beschreibungen aus dem Informations-Paket oder den Informations-Paketen verglichen, bevor die Konfigurations-Beschreibungen aus dem Informations-Paket als gültig angenommen, oder bevor diese mit den Prüfinformationen aus dem Informations-Paket verglichen werden.

Insbesondere kann die Einschränkung, wie beispielsweise eine weiße oder schwarze Liste für die zulässigen oder unzulässigen Konfigurations-Beschreibungen, an ein oder mehrere ausgewählte Hardware- und/oder Software-App-Pakete gebunden werden. Dadurch können auf unterschiedlichen computer-implementierten Vorrichtungen mittels bestimmter ausgewählter Hardware- und/oder Software-App-Pakete jedes Mal die gleichen Konfigurations-Beschreibungen als zulässig oder unzulässig festgelegt werden.

Der Vorteil der Bereitstellung der Prüfinformation während der dritten geschützten Betriebsphase bedingt eine maximale Flexibilität, da jeweils für einen rekonfigurierbaren Teil eines Digital-Bausteins die validen, gültigen Konfigurations-Beschreibungen vorgegeben werden können. Somit lässt sich insbesondere für jede Software-Applikation eine eigene weiße Liste mit Konfigurations-Beschreibungen definieren.

Vorzugsweise wird die Prüfinformation bereitgestellt, wenn ein Wartungsmodus der computer-implementierten Vorrichtung beendet ist.

Gemäß einer weiteren Ausführungsform umfasst die Bereitstellung der Prüfinformation im Voraus auf der computer-implementierten Vorrichtung die Bereitstellung der Prüfinformation bei der Fertigung oder bei der Inbetriebnahme der computer-implementierten Vorrichtung.

Hierbei wird insbesondere die Prüfinformation erstmalig bei der Fertigung oder bei der erstmaligen Inbetriebnahme bereitgestellt.

Der Vorteil dieser Ausführungsform ist eine einmalige Konfiguration, sodass hierfür keine zusätzlichen Ressourcen zur regulären Betriebsphase der computer-implementierten Vorrichtung aufgewendet werden müssen.

Gemäß einer weiteren Ausführungsform wird die Prüfinformation mittels eines Hauptprozessors oder mittels eines nichtflüchtigen Speichers oder als Teil eines Bitstreams bereitgestellt.

Insbesondere erfolgt die Bereitstellung und das Abspeichern der Prüfinformation im Voraus, also während der ersten geschützten Betriebsphase, in dieser Ausführungsform hardware-basiert. Die Bereitstellung mittels des Hauptprozessors erfolgt insbesondere unter Verwendung von dedizierten Sicherungen des Hauptprozessors (sog. "eFuses"). Der Hauptprozessor ist vorzugsweise eine zentrale Verarbeitungseinheit, eine "Central Processing Unit" (CPU). Der nicht-flüchtige Speicher ist insbesondere ein "Electrically Erasable Programmable Read-Only Memory" (EEPROM).

Bei dem Teil eines Bitstreams handelt es sich insbesondere um einen Teil eines Basis-Bitstreams. Bei einem Laden einer Konfigurations-Beschreibung in den rekonfigurierbaren Teil kann ein Logik-Baustein des Digital-Bausteins mittels der in den Basis-Bitstream geladenen Prüfinformation die Validität der zu ladenden bestimmten Konfigurations-Beschreibung prüfen.

Der Vorteil einer hardware-basierten Realisierung ist, dass die entsprechenden hardware-basierten Komponenten besser von der Software getrennt und somit schwieriger manipulierbar sind.

Insbesondere erfolgt die Bereitstellung der Prüfinformation im Voraus, also während der ersten geschützten Betriebsphase, in einer weiteren Ausführungsform software-basiert.

Hierbei wird die Prüfinformation beispielsweise statisch in ein Kernel-Image der computer-implementierten Vorrichtung integriert. Bei einem Laden einer Konfigurations-Beschreibung in den rekonfigurierbaren Teil kann dann eine Kernelkomponente mittels der im Kernel-Image integrierten Prüfinformationen die Validität der zu ladenden bestimmten Konfigurations-Beschreibung prüfen.

Gemäß einer weiteren Ausführungsform umfasst die Bereitstellung der Prüfinformation zur Laufzeit der computer-implementierten Vorrichtung die Bereitstellung der Prüfinformation während eines sicheren Bootvorgangs oder während eines Firmware-Updates der computer-implementierten Vorrichtung.

Der Vorteil dieser Ausführungsform ist, dass die Prüfinformation während der Laufzeit der computer-implementierten Vorrichtung aktualisiert werden kann oder durch die Aktualisierung einer Konfigurationsdatei mit anschließendem Neustart neu vorgegeben werden kann. Dies erspart insbesondere das Erzeugen eines neuen Basis-Bitstreams oder eines Kernel-Images.

Die Laufzeit der computer-implementierten Vorrichtung ist insbesondere als eine reguläre Betriebsphase, als eine Zeitphase während eines Firmware-Updates und/oder als eine Zeitphase während eines sicheren Bootvorgangs ausgebildet.

In dieser Ausführungsform wird insbesondere die Prüfinformation erstmalig während eines sicheren Bootvorgangs, wie beispielsweise einer "Secure Boot"-geschützten Startphase, bereitgestellt. Die Prüfinformation kann beispielsweise in einer geschützten Konfigurationsdatei auf einem persistenten Dateisystem abgelegt sein.

Weiterhin wird insbesondere die Prüfinformation beim Installieren eines Firmware-Updates bereitgestellt.

Gemäß einer weiteren Ausführungsform wird die Prüfinformation mittels eines Registers eines Hauptprozessors oder mittels eines Logik-Bausteins des Digital-Bausteins bereitgestellt.

Insbesondere erfolgt die Bereitstellung der Prüfinformation zur Laufzeit, also während der zweiten geschützten Betriebsphase, in dieser Ausführungsform hardware-basiert. Die Bereitstellung mittels des Hauptprozessors erfolgt insbesondere unter Verwendung von dedizierten Registern des Hauptprozessors und/oder des Digital-Bausteins. Der Hauptprozessor ist vorzugsweise eine zentrale Verarbeitungseinheit, eine "Central Processing Unit" (CPU).

Bei einem Laden einer Konfigurations-Beschreibung in den rekonfigurierbaren Teil kann der Logik-Baustein des Digital-Bausteins mittels der in dem dedizierten Register des Hauptprozessors oder des Digital-Bausteins geladenen Prüfinformation die Validität der zu ladenden bestimmten Konfigurations-Beschreibung prüfen.

Der Vorteil einer hardware-basierten Realisierung ist, dass die entsprechenden hardware-basierten Komponenten besser von der Software getrennt und somit nur mit deutlich erhöhtem Aufwand manipulierbar sind.

Insbesondere erfolgt die Bereitstellung der Prüfinformation zur Laufzeit, also während der zweiten geschützten Betriebsphase, in einer weiteren Ausführungsform software-basiert.

Hierbei wird die Prüfinformation beispielsweise in einen dedizierten Speicherbereich einer Treiberkomponente der Konfigurations-Beschreibung geladen. Bei einem Laden einer Konfigurations-Beschreibung in den rekonfigurierbaren Teil kann dann eine Kernelkomponente mittels der in den dedizierten Speicherbereich der Treiberkomponente geladenen Prüfinformation die Validität der zu ladenden bestimmten Konfigurations-Beschreibung prüfen.

Gemäß einer weiteren Ausführungsform wird die Prüfinformation während der dritten geschützten Betriebsphase mittels eines Registers eines Logik-Bausteins des Digital-Bausteins bereitgestellt.

Vorzugsweise erfolgt die Bereitstellung der Prüfinformation während der dritten geschützten Betriebsphase in dieser Ausführungsform hardware-basiert.

Insbesondere werden hierbei dedizierte Register aus einer Basis-Logik, welche innerhalb des Logik-Bausteins des Digital-Bausteins ausgebildet ist, verwendet. In dieser hardware-basierten Ausführungsform werden spezifisch für den jeweiligen rekonfigurierbaren Teil, getrennte und damit dedizierte Whitelist-Register gebildet. Bei einem Laden einer Konfigurations-Beschreibung in den rekonfigurierbaren Teil kann dann der Logik-Baustein des Digital-Bausteins mittels der in den Whitelist-Registern des Digital-Bausteins geladenen und gespeicherten Prüfinformation die Validität der zu ladenden bestimmten Konfigurations-Beschreibung prüfen.

Durch die hardware-basierte Bereitstellung der Prüfinformation ergibt sich der Vorteil, dass die entsprechenden hardware-basierten Elemente besser von der Software getrennt sind und dadurch eine Manipulation durch nicht-valide Konfigurations-Beschreibungen mittels Software nur mit einem deutlich erhöhten Aufwand realisierbar sind.

Insbesondere erfolgt die Bereitstellung der Prüfinformation während der dritten geschützten Betriebsphase in einer weiteren Ausführungsform software-basiert.

Hierbei wird die Prüfinformation beispielsweise in einen dedizierten Speicherbereich einer Treiberkomponente der Konfigurations-Beschreibung geladen. In dieser software-basierten Ausführungsform wird spezifisch für jeden rekonfigurierbaren Teil eine Whitelist von Prüfinformationen zu den in den dedizierten rekonfigurierbaren Teil ladbaren Konfigurations-Beschreibungen angelegt. Bei dem Laden einer Konfigurations-Beschreibung in den rekonfigurierbaren Teil kann dann eine Kernelkomponente mittels der im dedizierten Speicherbereich der Treiberkomponente geladenen Prüfinformationen die Validität der zu ladenden bestimmten Konfigurations-Beschreibung prüfen.

Gemäß einer weiteren Ausführungsform wird die Prüfinformation in Abhängigkeit eines Betriebsmodus der computer-implementierten Vorrichtung bereitgestellt.

Gemäß dieser Ausführungsform ist es möglich, die Validität von Konfigurations-Beschreibungen insbesondere an bestimmte, definierbare Zustände der Hardware, wie beispielsweise dem Digital-Baustein und/oder der Software der computer-implementierten Vorrichtung, zu binden.

Je nach Betriebsmodus, wie beispielsweise einem Testmodus oder einer regulären Betriebsphase der Hardware und/oder der Software, können unterschiedliche Whitelists verwendet werden.

Hierbei werden insbesondere für eine Bereitstellungs-Phase (engl. Provisioning-Phase) der computer-implementierten Vorrichtung spezielle Konfigurations-Beschreibungen verwendet, welche beispielsweise in der regulären Betriebsphase unverwendet sind. Eine spezielle Konfigurations-Beschreibung ist beispielsweise eine Konfigurations-Beschreibung zur Beschleunigung einer Verschlüsselung einer Partition.

Gemäß einer weiteren Ausführungsform wird die Prüfinformation in Abhängigkeit von zumindest einer bestimmten Bedingung der computer-implementierten Vorrichtung bereitgestellt.

Insbesondere werden in Abhängigkeit von bestimmten Bedingungen, wie beispielsweise dem Vorhandensein bestimmter Peripherie, unterschiedliche Konfigurations-Beschreibungen und/oder unterschiedliche weiße Listen von Konfigurations-Beschreibungen verwendet. Die Bedingung kann insbesondere durch den Zustand eines externen Schaltsignals, das Vorhandensein eines Codier-Steckers und/oder die Eingabe eines Service-Passwortes definiert werden. Dies hat den Vorteil, dass sich spezielle Konfigurationen, wie beispielsweise ein Service-Fall oder eine Feature-Erweiterung, verwalten und ausführen lassen.

Gemäß einer weiteren Ausführungsform wird nach der Prüfung der Validität im Schritt b) bei einem Vorhandensein der Validität der in den rekonfigurierbaren Teil des Digital-Bausteins zu ladenden bestimmten Konfigurations-Beschreibung eine erste Aktion ausgeführt, während bei einem Nichtvorhandensein der Validität der in den rekonfigurierbaren Teil des Digital-Bausteins zu ladenden bestimmten Konfigurations-Beschreibung eine zweite Aktion ausgeführt wird.

Beispielsweise werden als Prüfinformation für die Prüfung der Validität von zu ladenden bestimmten Konfigurations-Beschreibungen kryptographische Hashwerte und/oder kryptografische Hashfunktionen, wie HMAC verwendet. Vorzugsweise werden asymmetrische Signaturen, wie RSA-basierte Signaturen und symmetrische Signaturen, zum Beispiel HMAC-basierte Signaturen, verwendet.

Insbesondere werden Aktionen oder Reaktionen auf Ereignisse im Zusammenhang mit dem Laden oder dem Versuch eines Ladens von Konfigurations-Beschreibungen definiert. Diese Aktionen können mittels einer Policy (einer Richtlinie) für die gesamte computer-implementierte Vorrichtung oder für einen Teil jedes einzelnen Informations-Pakets definiert werden. Im letzteren
Fall kann die Policy somit individuell pro Paket definiert werden. Insbesondere werden beide Varianten auch zusammen verwendet.

Gemäß einer weiteren Ausführungsform umfasst die erste Aktion eine Erlaubnis eines Ladens der in den rekonfigurierbaren Teil des Digital-Bausteins zu ladenden bestimmten Konfigurations-Beschreibung und/oder ein Protokollieren der ersten Aktion.

Das Protokollieren der ersten Aktion kann auch als Loggen der ersten Aktion bezeichnet werden. Insbesondere kann die erste Aktion über ein Framework geloggt werden. Insbesondere wird die geloggte erste Aktion anschließend mittels eines HIDS ("Host-Based Intrusion Detection System") weiterverwendet. Die Logging-Daten, welche geloggt werden, umfassen beispielsweise Metadaten, wie den Hashwert und/oder einen Zeitstempel der Konfigurations-Beschreibung.

Die Eigenschaften des Protokollierens der ersten Aktion gelten auch für die Protokollierung einer im nächsten Absatz nachfolgenden zweiten Aktion.

Gemäß einer weiteren Ausführungsform umfasst die zweite Aktion ein Verhindern eines Erteilens einer Erlaubnis eines Ladens der in den rekonfigurierbaren Teil des Digital-Bausteins zu ladenden bestimmten Konfigurations-Beschreibung und/oder ein Verweigern eines Zugriffs auf zumindest eine bestimmte Einrichtung der computer-implementierten Vorrichtung und/oder einen Entzug der Fähigkeit des Austauschens einer Konfigurations-Beschreibung auf dem Digital-Baustein und/oder ein Anhalten einer auf dem Digital-Baustein laufenden Konfigurations-Beschreibung und/oder ein Protokollieren der zweiten Aktion.

Das Verhindern eines Erteilens einer Erlaubnis eines Ladens der in den rekonfigurierbaren Teil zu ladenden bestimmten Konfigurations-Beschreibung umfasst ein Blockieren des Ladens durch die Kernelkomponente und/oder den Logik-Baustein des Digital-Bausteins. Dies hat den Vorteil, dass ein Verwenden oder ein Laden einer nicht-validen Konfigurations-Beschreibung verhindert wird.

Insbesondere wird im Anschluss an einen Verstoß der Zugriff auf die bestimmte Einrichtung der computer-implementierten Vorrichtung verweigert. Dabei ist die bestimmte Einrichtung vorzugsweise als eine Schnittstelle zur aktuellen Konfigurations-Beschreibung ausgebildet. Die Schnittstelle umfasst insbesondere spezielle Register und/oder einen Speicherdirektzugriff (DMA; "Direct Memory Access"). Außerdem wird insbesondere im Anschluss an einen Verstoß der Konfigurations-Beschreibung die Fähigkeit zum Austauschen entzogen. Dies hat den Vorteil, dass die Software-Applikation anschließend in den ihr zur Verfügung stehenden Konfigurations-Beschreibungen weiter eingeschränkt ist, wodurch eine mögliche Kompromittierung oder schadhafte Nutzung verhindert oder weiter erschwert wird.

Weiterhin kann insbesondere bei dem Versuch, eine nicht-valide Konfigurations-Beschreibung zu laden, die aktuelle Konfigurations-Beschreibung angehalten werden und/oder der rekonfigurierbare Teil, in welchem die Konfigurations-Beschreibung gespeichert ist, kann gelöscht werden und/oder eine "Fail-Safe-Konfigurations-Beschreibung" kann als Ersatz in den rekonfigurierbaren Teil geladen werden, welche eine I/O-Schnittstelle auf feste Werte (sog. Fail-Safe-Werte) setzt.

Gemäß einer weiteren Ausführungsform ist die computer-implementierte Vorrichtung als ein Feldgerät, als ein Steuergerät, als ein Überwachungsgerät, als ein IoT-Device, als ein Edge Cloud Device, als ein Cloud Server oder als ein Appenabled Time Server ausgebildet.

Gemäß einem zweiten Aspekt wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt wird eine computer-implementierte Vorrichtung zum Verarbeiten von Daten vorgeschlagen. Die computer-implementierte Vorrichtung umfasst einen Digital-Baustein mit zumindest einem durch zumindest eine Konfigurations-Beschreibung rekonfigurierbaren Teil, eine Bereitstellungs-Einheit zum Bereitstellen, während einer geschützten Betriebsphase der computer-implementierten Vorrichtung, einer Prüfinformation zur Angabe von zulässigen in den rekonfigurierbaren Teil des Digital-Bausteins ladbaren Konfigurations-Beschreibungen, und eine Prüf-Einheit zum Prüfen der Validität einer in den rekonfigurierbaren Teil des Digital-Bausteins zu ladenden bestimmten Konfigurations-Beschreibung durch Vergleichen der in den rekonfigurierbaren Teil des Digital-Bausteins zu ladenden bestimmten Konfigurations-Beschreibung mit der Prüfinformation.

Die jeweilige Einheit, zum Beispiel die Bereitstellungs-Einheit oder die Prüf-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Ablaufdiagramm eines ersten Ausführungsbeispiels eines Verfahrens zum Prüfen einer Validität von Daten;
- Fig. 2: zeigt ein schematisches Ablaufdiagramm eines zweiten Ausführungsbeispiels eines Verfahrens zum Prüfen einer Validität von Daten;
- Fig. 3: zeigt ein schematisches Ablaufdiagramm eines dritten Ausführungsbeispiels eines Verfahrens zum Prüfen einer Validität von Daten;
- Fig. 4: zeigt ein schematisches Ablaufdiagramm eines vierten Ausführungsbeispiels eines Verfahrens zum Prüfen einer Validität von Daten; und
- Fig. 5: zeigt ein schematisches Blockdiagramm eines Ausführungsbeispiels einer computer-implementierte Vorrichtung zum Verarbeiten von Daten.

In den Figuren sind gleiche oder funktionsgleiche Elemente mit denselben Bezugszeichen versehen worden, sofern nichts anderes angegeben ist.

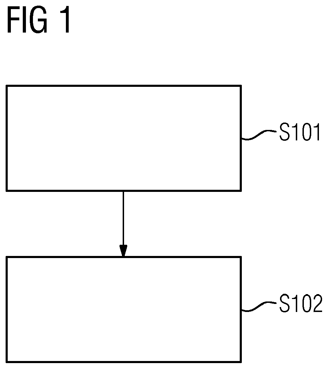

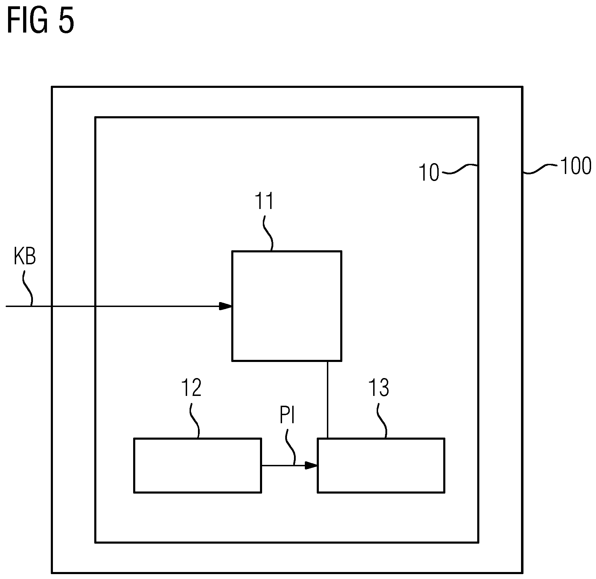

Fig. 1 zeigt ein schematisches Ablaufdiagramm eines ersten Ausführungsbeispiels eines Verfahrens zum Prüfen einer Validität von Daten für eine computer-implementierte Vorrichtung 100 nach Fig. 5. Die computer-implementierte Vorrichtung 100 umfasst zumindest einen Digital-Baustein 10 mit zumindest einem durch zumindest eine Konfigurations-Beschreibung KB rekonfigurierbaren Teil 11.

Das erste Ausführungsbeispiel in Fig. 1 umfasst die Verfahrensschritte S101 und S102:
In dem Schritt S101 wird während einer geschützten Betriebsphase der computer-implementierten Vorrichtung 100 eine Prüfinformation PI bereitgestellt, welche zur Angabe von zulässigen in den rekonfigurierbaren Teil 11 des Digital-Bausteins 10 ladbaren Konfigurations-Beschreibungen KB dient.

In dem Schritt S102 wird eine Validität einer in den rekonfigurierbaren Teil 11 des Digital-Bausteins 10 zu ladenden bestimmten Konfigurations-Beschreibung KB durch Vergleichen der in den rekonfigurierbaren Teil 11 des Digital-Bausteins 10 zu ladenden bestimmten Konfigurations-Beschreibung KB mit der Prüfinformation PI, überprüft.

Vorzugsweise ist die Prüfinformation PI als ein Name, als eine digitale Signatur und/oder als ein digitales Zertifikat ausgebildet. Die Prüfinformation PI kann ferner auch als eine weiße Liste, als eine schwarze Liste und/oder als ein kryptografischer Hashwert ausgebildet sein.

Die Prüfinformation PI wird vorzugsweise in Abhängigkeit eines Betriebsmodus der computer-implementierten Vorrichtung 100 oder in Abhängigkeit von zumindest einer bestimmten Bedingung der computer-implementierten Vorrichtung 100 bereitgestellt.

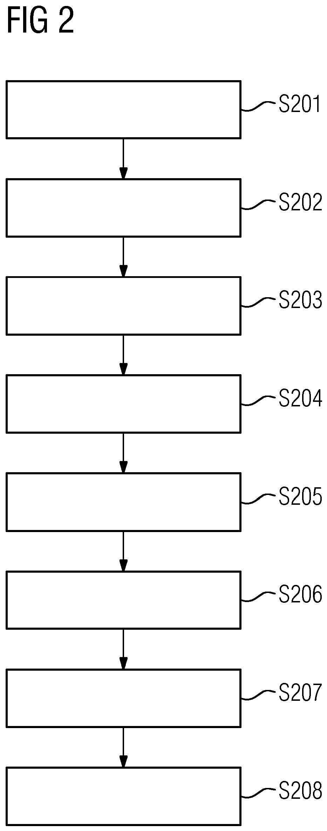

Fig. 2 zeigt ein schematisches Ablaufdiagramm eines zweiten Ausführungsbeispiels eines Verfahrens zum Prüfen einer Validität von Daten. Das zweite Ausführungsbeispiel in Fig. 2 kann als ein statisches, hardware-basiertes Konfigurations-Beschreibungs-Whitelisting bezeichnet werden.

Hierbei ist die geschützte Betriebsphase der computer-implementierten Vorrichtung 100 insbesondere als eine erste geschützte Betriebsphase ausgebildet, während welcher die Prüfinformation PI im Voraus auf der computer-implementierten Vorrichtung 100 bereitgestellt wird. Eine solche Bereitstellung im Voraus umfasst vorzugsweise die Bereitstellung der Prüfinformation PI bei der Fertigung oder bei der Inbetriebnahme der computer-implementierten Vorrichtung 100. Die computer-implementierte Vorrichtung 100 umfasst in diesem Ausführungsbeispiel insbesondere eine CPU (nicht dargestellt), die eine Hardware-App-Kontrolllogik (HWAC, "Hardware-App-Control-Logic") aufweist, einen Digital-Baustein 10, einen rekonfigurierbaren Teil 11, eine Software-App, einen Bootloader, der vorzugsweise ein Erste-Stufe-Bootloader ist, ein persistentes Speichermedium und eine Whitelist, die innerhalb des Digital-Bausteins 10 angeordnet ist. Der Digital-Baustein 10 umfasst insbesondere einen Logik-Baustein.

Die Prüfinformation PI wird beispielsweise mittels eines Hauptprozessors oder mittels eines nicht-flüchtigen Speichers oder als Teil eines Bitstreams bereitgestellt. Im zweiten Ausführungsbeispiel in Fig. 2 wird die Prüfinformation PI als Teil eines Bitstreams bereitgestellt.

Das zweite Ausführungsbeispiel in Fig. 2 umfasst die Verfahrensschritte S201 bis S208:
In dem ersten Schritt S201 liest der Bootloader den Basis-Bitstream aus dem persistenten Speichermedium der computer-implementierten Vorrichtung 100 aus und verwendet diesen um den Digital-Baustein 10 zu konfigurieren. In dieser zweiten Ausführungsform ist die Whitelist, welche Informationen von validen Hardware-Apps umfasst, direkt mit in dem Basis-Bitstream integriert. Somit liegt dem Logik-Baustein des Digital-Bausteins 10 die Prüfinformation PI in Form von Registern vor.

In dem Schritt S202 führt der Bootloader die Bootsequenz fort, um beispielsweise ein Kernel und eine Software-App zu laden und auszuführen.

In dem Schritt S203 lädt die Software-App eine zu ladende bestimmte Konfigurations-Beschreiung KB (Hardware-App) und überträgt diese zu der HWAC der CPU, wobei die Software-App hierbei insbesondere innerhalb eines Benutzerraums auf der CPU angeordnet ist.

In dem Schritt S204 überträgt die HWAC die zu ladende bestimmte Konfigurations-Beschreibung KB an den Logik-Baustein des Digital-Bausteins 10. Der Logik-Baustein umfasst vorzugsweise einen Logiktreiber. Der Logiktreiber ist insbesondere als eine HAV-Logik ausgebildet.

In dem Schritt S205 wird der Logiktreiber des Logik-Bausteins des Digital-Bausteins 10 verwendet, um die Validität der aus dem Schritt S204 empfangenen bestimmten Konfigurations-Beschreibung KB mittels der in der Whitelist vorhandenen Prüfinformation PI zu prüfen. Die Whitelist ist hierbei insbesondere mit dem Logik-Baustein des Digital-Bausteins 10 verbunden.

In dem Schritt S206 wird, falls die bestimmte Konfigurations-Beschreibung KB in der Whitelist aufgeführt ist, der rekonfigurierbare Teil 11 des Digital-Bausteins 10 neu rekonfiguriert. Dieser Vorgang kann auch als ein Instanziieren der Konfigurations-Beschreibung KB verstanden werden.

In dem Schritt S207 wird das Ergebnis des Vorgangs, also ob die Konfigurations-Beschreibung KB valide, nicht valide oder fehlerhaft ist, an die HWAC zurückgegeben.

In dem letzten Schritt S208 werden das Ereignis und das entsprechende Ergebnis geloggt. Somit kann beispielsweise der Versuch, eine nicht-valide Konfigurations-Beschreibung KB (Hardware-App) zu installieren, festgehalten und erkannt werden.

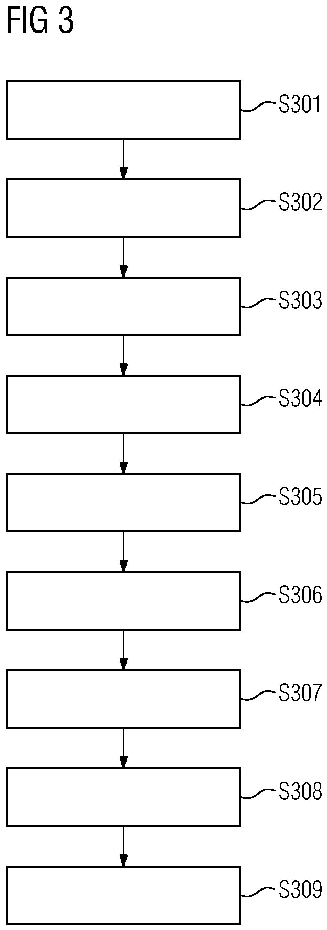

Fig. 3 zeigt ein schematisches Ablaufdiagramm eines dritten Ausführungsbeispiels eines Verfahrens zum Prüfen einer Validität von Daten. Das dritte Ausführungsbeispiel in Fig. 3 kann als ein semi-statisches, hardware-basiertes Konfigurations-Beschreibungs-Whitelisting bezeichnet werden.

Hierbei ist die geschützte Betriebsphase der computer-implementierten Vorrichtung 100 insbesondere als eine zweite geschützte Betriebsphase ausgebildet, während welcher die Prüfinformation PI zur Laufzeit der computer-implementierten Vorrichtung 100 bereitgestellt wird. Eine solche Bereitstellung zur Laufzeit umfasst vorzugsweise die Bereitstellung der Prüfinformation PI während eines sicheren Bootvorgangs oder während eines Firmware-Updates der computer-implementierten Vorrichtung 100.

Die computer-implementierte Vorrichtung 100 umfasst in diesem dritten Ausführungsbeispiel insbesondere eine CPU (nicht dargestellt), die eine Hardware-App-Kontrolllogik (HWAC) aufweist, einen Digital-Baustein 10, einen rekonfigurierbaren Teil 11, eine Software-App, einen Benutzerraum der CPU, einen Bootloader, der vorzugsweise ein Erste-Stufe-Bootloader ist, einen RUM (Reconfiguration and Update Manager), ein persistentes Speichermedium und eine Whitelist, die innerhalb des Digital-Bausteins 10 angeordnet ist. Der Digital-Baustein 10 umfasst insbesondere einen Logik-Baustein. Der Logik-Baustein umfasst vorzugsweise einen Logiktreiber. Der Logiktreiber ist insbesondere als eine Hardware-App-Validierungslogik (HAV-Logik) ausgebildet.

Die Prüfinformation PI wird beispielsweise mittels eines Registers eines Hauptprozessors oder mittels eines Logik-Bausteins des Digital-Bausteins 10 bereitgestellt. Der Logik-Baustein ist insbesondere mit der Whitelist verbunden.

Im Gegensatz zu der statischen Variante aus dem zweiten Ausführungsbeispiel in Fig. 2, in welcher die Programmierung des Digital-Bausteins 10 sowie der Whitelist des Digital-Bausteins 10 mittels eines Basis-Bitstreams während der Bootphase erfolgt, wird in dem dritten Ausführungsbeispiel in Fig. 3 die Programmierung der Whitelist zur Laufzeit durchgeführt. Ein Programmieren der Whitelist kann auch als ein Bereitstellen der Whitelist bezeichnet werden.

Das dritte Ausführungsbeispiel in Fig. 3 umfasst die Verfahrensschritte S301 bis S309:
In dem ersten Schritt S301 liest eine dedizierte Softwarekomponente, der RUM (Reconfiguration and Update Manager), die Whitelist aus einem Dateisystem der computer-implementierten Vorrichtung 100 insbesondere während der Bootphase oder erneut nach einem Update aus.

In dem Schritt S302 werden die Prüfinformationen PI, oder auch die validen Konfigurations-Beschreibungen KB mittels einer dedizierten Schnittstelle des Betriebssystems, bereitgestellt durch einen Treiber, von dem RUM zu dem Treiber übergeben oder übertragen.

In dem Schritt S303 wird die von dem Treiber erhaltene Whitelist umfassend die validen Konfigurations-Beschreibungen KB anschließend in die dafür vorgesehenen Register des Digital-Bausteins 10 geschrieben und somit dem Digital-Baustein 10 bereitgestellt.

Die weiteren Schritte S304 bis S309 sind analog zu den Schritten S203 bis S208. Der Unterschied dieser dritten Ausführungsform zur zweiten Ausführungsform ist hier, wie oben erläutert, dass innerhalb des Basis-Bitstreams keine Whitelist statisch zur Verfügung gestellt wird, sondern dass die Whitelist zur Laufzeit dynamisch konfigurierbar ist.

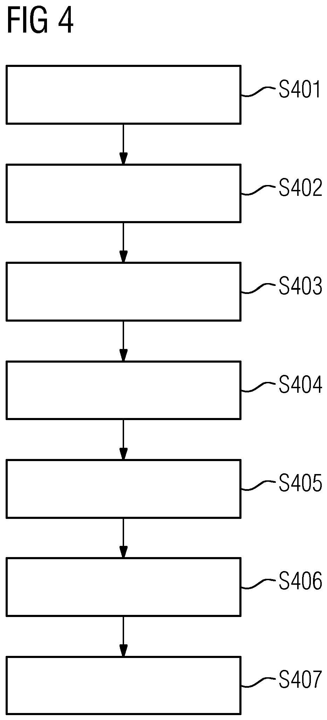

Fig. 4 zeigt ein schematisches Ablaufdiagramm eines vierten Ausführungsbeispiels eines Verfahrens zum Prüfen einer Validität von Daten. Das vierte Ausführungsbeispiel in Fig. 4 kann als ein dynamisches, software-basiertes Konfigurations-Beschreibungs-Whitelisting bezeichnet werden.

Hierbei ist die geschützte Betriebsphase der computer-implementierten Vorrichtung 100 insbesondere als eine dritte geschützte Betriebsphase ausgebildet, während welcher die Prüfinformation PI in Abhängigkeit eines Informations-Pakets während einer Installation des Informations-Pakets bereitgestellt wird.

Die computer-implementierte Vorrichtung 100 umfasst in diesem vierten Ausführungsbeispiel insbesondere eine CPU (nicht dargestellt), die einen Treiber und einen Kernel-Treiber umfasst, wobei der Treiber eine Hardware-App-Kontrolllogik (HWAC), einen Logiktreiber und eine Whitelist umfasst, einen Digital-Baustein 10, einen rekonfigurierbaren Teil 11, eine Software-App, einen Benutzerraum der CPU, einen Bootloader, der vorzugsweise ein Erste-Stufe-Bootloader ist, einen RUM (Reconfiguration and Update Manager) und ein persistentes Speichermedium. Der Digital-Baustein 10 umfasst insbesondere einen Logik-Baustein. Der Logiktreiber ist insbesondere als eine HAV-Logik ausgebildet.

Die Prüfinformation PI wird beispielsweise mittels eines Registers eines Logik-Bausteins des Digital-Bausteins 10 bereitgestellt. Der Logik-Baustein ist insbesondere über die HWAC und den Logiktreiber mit der Whitelist verbunden.

Im Gegensatz zu dem zweiten und dem dritten Ausführungsbeispiel in Fig. 2 und 3, in welchen die Programmierung des Digital-Bausteins 10 sowie der Whitelist des Digital-Bausteins 10 mittels eines Basis-Bitstreams während der Bootphase erfolgt, wird in dem vierten Ausführungsbeispiel in Fig. 4 die Programmierung der Whitelist im Zuge eines Startens eines Informations-Pakets, welches beispielsweise ein Hardware-/Software-App-Paket umfasst, durchgeführt. Ein Programmieren der Whitelist kann auch als ein Bereitstellen der Whitelist bezeichnet werden.

Das vierte Ausführungsbeispiel in Fig. 4 umfasst die Verfahrensschritte S401 bis S407:
In dem ersten Schritt S401 wird das Hardware-/Software-App-Paket vom RUM geladen und die entsprechenden Komponenten, wie beispielsweise eine Software-App Binärdatei und valide Konfigurations-Beschreibungen KB, extrahiert. Anschließend werden Hashwerte für die einzelnen Konfigurations-Beschreibungen KB berechnet.

In dem Schritt S402 verwendet der RUM eine durch den Kernel-Treiber bereitgestellte Schnittstelle, um die berechneten Hashwerte an die HWAC für den der Software-App zugeordneten rekonfigurierbaren Teil 11 zu übergeben.

In dem Schritt S403 werden die Hashwerte der validen Konfigurations-Beschreibungen KB, welche hierbei insbesondere als Prüfinformation PI dienen, in einer Datenstruktur gespeichert, welche der Treiber für den rekonfigurierbaren Teil 11 des Digital-Bausteins 10 verwaltet. Diese Datenstruktur bildet somit die Whitelist für die validen Konfigurations-Beschreibungen KB.

In dem Schritt S404 verwendet die Software-App die ihr zur Verfügung gestellte Schnittstelle zu dem rekonfigurierbaren Teil 11, also den Treiber, um eine zu ladende bestimmte Konfigurations-Beschreibung KB (Hardware-App) zu laden.

In dem Schritt S405 wird mittels der HWAC und dem Logiktreiber die empfangene bestimmte Konfigurations-Beschreibung KB gegen die vorher geladene Whitelist geprüft.

In dem Schritt S406 wird, falls die Prüfung positiv ist, die bestimmte Konfigurations-Beschreibung KB an den Logik-Baustein des Digital-Bausteins 10 weitergegeben. Falls die Prüfung nicht positiv ist, wird das Ereignis geloggt und der Vorgang abgebrochen. Insbesondere kann auch in einem positiven Fall das Ereignis geloggt werden.

In dem Schritt S407 verwendet der Logik-Baustein des Digital-Bausteins 10 anschließend die validierte Konfigurations-Beschreibung KB um diese auf dem rekonfigurierbaren Teil 11 zu instanziieren.

Fig. 5 zeigt ein schematisches Blockdiagramm eines Ausführungsbeispiels einer computer-implementierten Vorrichtung 100 zum Verarbeiten von Daten. Die computer-implementierte Vorrichtung 100 umfasst einen Digital-Baustein 10 mit zumindest einem durch zumindest eine Konfigurations-Beschreibung KB rekonfigurierbaren Teil 11. Weiterhin umfasst die computer-implementierte Vorrichtung 100 eine Bereitstellungs-Einheit 12 und eine Prüf-Einheit 13.

Die Bereitstellungs-Einheit 12 ist insbesondere dazu eingerichtet, während einer geschützten Betriebsphase der computer-implementierten Vorrichtung 100 eine Prüfinformation PI zur Angabe von zulässigen in den rekonfigurierbaren Teil 11 des Digital-Bausteins 10 ladbaren Konfigurations-Beschreibungen KB bereitzustellen.

Die Prüf-Einheit 13 ist insbesondere dazu eingerichtet, eine Validität einer in den rekonfigurierbaren Teil 11 des Digital-Bausteins 10 zu ladenden bestimmten Konfigurations-Beschreibung KB zu prüfen durch Vergleichen der in den rekonfigurierbaren Teil 11 des Digital-Bausteins 10 zu ladenden bestimmten Konfigurations-Beschreibung KB mit der Prüfinformation PI.

Die in Fig. 5 dargestellte Konfigurations-Beschreibung KB ist insbesondere die bestimmte zu ladende Konfigurations-Beschreibung KB. Diese ist vorzugsweise valide oder nicht-valide.

Ferner können die Bereitstellungs-Einheit 12 und die Prüf-Einheit 13 auch außerhalb des Digital-Bausteins 10, aber innerhalb der computer-implementierten Vorrichtung 100 angeordnet sein. Denkbar ist vorzugsweise auch, dass nur die Prüf-Einheit 13 außerhalb des Digital-Bausteins 10 angeordnet ist, während die Bereitstellungs-Einheit 12 innerhalb des Digital-Bausteins 10 angeordnet ist. Dies gilt auch insbesondere umgekehrt.

Vorzugsweise stellt in Fig. 5 die Bereitstellungs-Einheit 12, welche beispielsweise eine Whitelist mit Prüfinformationen PI enthält, der Prüf-Einheit 13 diese Whitelist zur Verfügung, damit die Prüf-Einheit 13 die Validität der zu ladenden bestimmten Konfigurations-Beschreibung KB mittels der Prüfinformation PI prüfen kann.

Insbesondere wird nach der Prüfung der Validität in den Schritten S102, S205, S306 und S405 bei einem Vorhandensein der Validität der in den rekonfigurierbaren Teil 11 des Digital-Bausteins 10 zu ladenden bestimmten Konfigurations-Beschreibung KB eine erste Aktion ausgeführt. Weiterhin wird bei einem Nichtvorhandensein der Validität der in den rekonfigurierbaren Teil 11 des Digital-Bausteins 10 zu ladenden bestimmten Konfigurations-Beschreibung KB eine zweite Aktion ausgeführt.

Die erste Aktion kann eine Erlaubnis eines Ladens der in den rekonfigurierbaren Teil 11 des Digital-Bausteins 10 zu ladenden bestimmten Konfigurations-Beschreibung KB und/oder ein Protokollieren der ersten Aktion umfassen.

Insbesondere umfasst die zweite Aktion ein Verhindern eines Erteilens einer Erlaubnis eines Ladens der in den rekonfigurierbaren Teil 11 des Digital-Bausteins 10 zu ladenden bestimmten Konfigurations-Beschreibung KB. Weiterhin weist die zweite Aktion ein Verweigern eines Zugriffs auf zumindest eine bestimmte Einrichtung der computer-implementierten Vorrichtung 100 auf. Ferner umfasst die zweite Aktion einen Entzug der Fähigkeit des Austauschens einer Konfigurations-Beschreibung KB auf dem Digital-Baustein 10 und/oder ein Anhalten einer auf dem Digital-Baustein 10 laufenden Konfigurations-Beschreibung KB und/oder ein Protokollieren der zweiten Aktion.

Obwohl die vorliegende Erfindung anhand von Ausführungsbeispielen beschrieben wurde, ist sie vielfältig modifizierbar.

## Patentansprüche

1. Verfahren zum Prüfen einer Validität von Daten für eine computer-implementierte Vorrichtung (100), die zumindest einen Digital-Baustein (10) mit zumindest einem durch zumindest eine Konfigurations-Beschreibung (KB) rekonfigurierbaren Teil (11) umfasst, mit den Schritten:
a) Bereitstellen, während einer geschützten Betriebsphase der computer-implementierten Vorrichtung (100), einer Prüfinformation (PI) zur Angabe von zulässigen in den rekonfigurierbaren Teil (11) des Digital-Bausteins (10) ladbaren Konfigurations-Beschreibungen (KB), wobei die Prüfinformation (PI) als eine weiße Liste ausgebildet ist, welche Hashwerte der validen Konfigurations-Beschreibungen (KB) umfasst, wobei die geschützte Betriebsphase der computer-implementierten Vorrichtung (100) als eine erste geschützte Betriebsphase zur Bereitstellung der Prüfinformation (PI) im Voraus auf der computer-implementierten Vorrichtung (100) und/oder als eine zweite geschützte Betriebsphase zur Bereitstellung der Prüfinformation (PI) zur Laufzeit der computer-implementierten Vorrichtung (100) und als eine dritte geschützte Betriebsphase zur Bereitstellung der Prüfinformation (PI) in Abhängigkeit eines Informations-Pakets während einer Installation des Informations-Pakets ausgebildet ist, und
b) Prüfen der Validität einer in den rekonfigurierbaren Teil (11) des Digital-Bausteins (10) zu ladenden bestimmten Konfigurations-Beschreibung (KB), welche als eine der zulässigen in den rekonfigurierbaren Teil (11) des Digital-Bausteins (10) ladbaren Konfigurations-Beschreibungen (KB) oder als eine unzulässige in den rekonfigurierbaren Teil (11) des Digital-Bausteins (10) zu ladende bestimmte Konfigurations-Beschreibung (KB) ausgebildet ist, durch Vergleichen der in den rekonfigurierbaren Teil (11) des Digital-Bausteins (10) zu ladenden bestimmten Konfigurations-Beschreibung (KB) mit der Prüfinformation (PI).

2. Verfahren nach Anspruch 1,
**dadurch gekennzeichnet,**
**dass** die Bereitstellung der Prüfinformation (PI) im Voraus auf der computer-implementierten Vorrichtung (100) die Bereitstellung der Prüfinformation (PI) bei der Fertigung oder bei der Inbetriebnahme der computer-implementierten Vorrichtung (100) umfasst.

3. Verfahren nach Anspruch 2,
**dadurch gekennzeichnet,**
**dass** die Prüfinformation (PI) mittels eines Hauptprozessors oder mittels eines nicht-flüchtigen Speichers oder als Teil eines Bitstreams bereitgestellt wird.

4. Verfahren nach einem der Ansprüche 1 bis 3,
**dadurch gekennzeichnet,**
**dass** die Bereitstellung der Prüfinformation (PI) zur Laufzeit der computer-implementierten Vorrichtung (100) die Bereitstellung der Prüfinformation (PI) während eines sicheren Bootvorgangs oder während eines Firmware-Updates der computer-implementierten Vorrichtung (100) umfasst.

5. Verfahren nach Anspruch 4,
**dadurch gekennzeichnet,**
**dass** die Prüfinformation (PI) mittels eines Registers eines Hauptprozessors oder mittels eines Logik-Bausteins des Digital-Bausteins (10) bereitgestellt wird.

6. Verfahren nach einem der Ansprüche 1 bis 5,
**dadurch gekennzeichnet,**
**dass** die Prüfinformation (PI) während der dritten geschützten Betriebsphase mittels eines Registers eines Logik-Bausteins des Digital-Bausteins (10) bereitgestellt wird.

7. Verfahren nach einem der Ansprüche 1 bis 6,
**dadurch gekennzeichnet,**
**dass** die Prüfinformation (PI) in Abhängigkeit eines Betriebsmodus der computer-implementierten Vorrichtung (100) bereitgestellt wird.

8. Verfahren nach einem der Ansprüche 1 bis 7,
**dadurch gekennzeichnet,**
**dass** die Prüfinformation (PI) in Abhängigkeit von zumindest einer bestimmten Bedingung der computer-implementierten Vorrichtung (100) bereitgestellt wird.

9. Verfahren nach einem der Ansprüche 1 bis 8,
**dadurch gekennzeichnet,**
**dass** nach der Prüfung der Validität im Schritt b) bei einem Vorhandensein der Validität der in den rekonfigurierbaren Teil (11) des Digital-Bausteins (10) zu ladenden bestimmten Konfigurations-Beschreibung (KB) eine erste Aktion ausgeführt wird, während bei einem Nichtvorhandensein der Validität der in den rekonfigurierbaren Teil (11) des Digital-Bausteins (10) zu ladenden bestimmten Konfigurations-Beschreibung (KB) eine zweite Aktion ausgeführt wird.

10. Verfahren nach Anspruch 9,
**dadurch gekennzeichnet,**
**dass** die erste Aktion eine Erlaubnis eines Ladens der in den rekonfigurierbaren Teil (11) des Digital-Bausteins (10) zu ladenden bestimmten Konfigurations-Beschreibung (KB) umfasst.

11. Verfahren nach Anspruch 9 oder 10,
**dadurch gekennzeichnet,**
**dass** die zweite Aktion ein Verhindern eines Erteilens einer Erlaubnis eines Ladens der in den rekonfigurierbaren Teil (11) des Digital-Bausteins (10) zu ladenden bestimmten Konfigurations-Beschreibung (KB) umfasst.

12. Verfahren nach Anspruch 9 oder 10,
**dadurch gekennzeichnet,**
**dass** die zweite Aktion ein Verweigern eines Zugriffs auf zumindest eine bestimmte Einrichtung der computer-implementierten Vorrichtung (100) umfasst.

13. Verfahren nach Anspruch 9 oder 10,
**dadurch gekennzeichnet,**
**dass** die zweite Aktion einen Entzug der Fähigkeit des Austauschens einer Konfigurations-Beschreibung (KB) auf dem Digital-Baustein (10) umfasst.

14. Computerprogrammprodukt, welches auf einer programmgesteuerten Einrichtung die Durchführung des Verfahrens nach einem der Ansprüche 1 bis 13 veranlasst.

15. Computer-implementierte Vorrichtung (100) zum Verarbeiten von Daten, mit:
einem Digital-Baustein (10) mit zumindest einem durch zumindest eine Konfigurations-Beschreibung (KB) rekonfigurierbaren Teil (11),
einer Bereitstellungs-Einheit (12) zum Bereitstellen, während einer geschützten Betriebsphase der computer-implementierten Vorrichtung (100), einer Prüfinformation (PI) zur Angabe von zulässigen in den rekonfigurierbaren Teil (11) des Digital-Bausteins (10) ladbaren Konfigurations-Beschreibungen (KB), wobei die Prüfinformation (PI) als eine weiße Liste ausgebildet ist, welche Hashwerte der validen Konfigurations-Beschreibungen (KB) umfasst, wobei die geschützte Betriebsphase der computer-implementierten Vorrichtung (100) als eine erste geschützte Betriebsphase zum Bereitstellen der Prüfinformation (PI) im Voraus auf der computer-implementierten Vorrichtung (100) und/oder als eine zweite geschützte Betriebsphase zum Bereitstellen der Prüfinformation (PI) zur Laufzeit der computer-implementierten Vorrichtung (100) und als eine dritte geschützte Betriebsphase zum Bereitstellen der Prüfinformation (PI) in Abhängigkeit eines Informations-Pakets während einer Installation des Informations-Pakets ausgebildet ist, und
einer Prüf-Einheit (13) zum Prüfen der Validität einer in den rekonfigurierbaren Teil (11) des Digital-Bausteins (10) zu ladenden bestimmten Konfigurations-Beschreibung (KB), welche als eine der zulässigen in den rekonfigurierbaren Teil (11) des Digital-Bausteins (10) ladbaren Konfigurations-Beschreibungen (KB) oder als eine unzulässige in den rekonfigurierbaren Teil (11) des Digital-Bausteins (10) zu ladende bestimmte Konfigurations-Beschreibung (KB) ausgebildet ist, durch Vergleichen der in den rekonfigurierbaren Teil (11) des Digital-Bausteins (10) zu ladenden bestimmten Konfigurations-Beschreibung (KB) mit der Prüfinformation (PI).

## Claims

1. Method for testing a validity of data for a computer-implemented apparatus (100) that comprises at least one digital chip (10) having at least one part (11) that is reconfigurable by means of at least one configuration description (KB), having the steps of:
a) providing, during a protected operating phase of the computer-implemented apparatus (100), a piece of test information (PI) for indicating admissible configuration descriptions (KB) that can be loaded into the reconfigurable part (11) of the digital chip (10), wherein the test information (PI) is in the form of a whitelist comprising hash values for the valid configuration descriptions (KB), wherein the protected operating phase of the computer-implemented apparatus (100) is in the form of a first protected operating phase for providing the test information (PI) in advance on the computer-implemented apparatus (100) and/or in the form of a second protected operating phase for providing the test information (PI) at runtime of the computer-implemented apparatus (100) and in the form of a third protected operating phase for providing the test information (PI) on the basis of an information packet while the information packet is being installed, and
b) testing the validity of a determined configuration description (KB) needing to be loaded into the reconfigurable part (11) of the digital chip (10), which configuration description is in the form of one of the admissible configuration descriptions (KB) that can be loaded into the reconfigurable part (11) of the digital chip (10) or in the form of an inadmissible determined configuration description (KB) needing to be loaded into the reconfigurable part (11) of the digital chip (10), by comparing the determined configuration description (KB) needing to be loaded into the reconfigurable part (11) of the digital chip (10) with the test information (PI).

2. Method according to Claim 1,
**characterized**
**in that** the provision of the test information (PI) in advance on the computer-implemented apparatus (100) comprises the provision of the test information (PI) while the computer-implemented apparatus (100) is being produced or being started up.

3. Method according to Claim 2,
**characterized**
**in that** the test information (PI) is provided by means of a main processor or by means of a non-volatile memory or as part of a bit stream.

4. Method according to one of Claims 1 to 3,
**characterized**
**in that** the provision of the test information (PI) at runtime of the computer-implemented apparatus (100) comprises the provision of the test information (PI) during a safe boot operation or during a firmware update for the computer-implemented apparatus (100).

5. Method according to Claim 4,
**characterized**
**in that** the test information (PI) is provided by means of a register of a main processor or by means of a logic chip of the digital chip (10).

6. Method according to one of Claims 1 to 5,
**characterized**
**in that** the test information (PI) is provided during the third protected operating phase by means of a register of a logic chip of the digital chip (10).

7. Method according to one of Claims 1 to 6,
characterized
that the test information (PI) is provided on the basis of an operating mode of the computer-implemented apparatus (100).

8. Method according to one of Claims 1 to 7,
**characterized**
**in that** the test information (PI) is provided on the basis of at least one determined condition of the computer-implemented apparatus (100).

9. Method according to one of Claims 1 to 8,
**characterized**
**in that** the test on the validity in step b) is followed by a first action being performed if the validity is present for the determined configuration description (KB) needing to be loaded into the reconfigurable part (11) of the digital chip (10), whereas a second action is performed if the validity is not present for the determined configuration description (KB) needing to be loaded into the reconfigurable part (11) of the digital chip (10).

10. Method according to Claim 9,
**characterized**
**in that** the first action comprises a permission to load the determined configuration description (KB) needing to be loaded into the reconfigurable part (11) of the digital chip (10).

11. Method according to Claim 9 or 10,
**characterized**
**in that** the second action comprises preventing the granting of a permission to load the determined configuration description (KB) needing to be loaded into the reconfigurable part (11) of the digital chip (10).

12. Method according to Claim 9 or 10,
**characterized**
**in that** the second action comprises denying access to at least one determined device of the computer-implemented apparatus (100) .

13. Method according to Claim 9 or 10,
**characterized**
**in that** the second action comprises withdrawal of the ability to exchange a configuration description (KB) on the digital chip (10).

14. Computer program product that prompts the method according to one of Claims 1 to 13 to be carried out on a program-controlled device.

15. Computer-implemented apparatus (100) for processing data, having:
a digital chip (10) having at least one part (11) that is reconfigurable by means of at least one configuration description (KB),
a providing unit (12) for providing, during a protected operating phase of the computer-implemented apparatus (100), a piece of test information (PI) for indicating admissible configuration descriptions (KB) that can be loaded into the reconfigurable part (11) of the digital chip (10), wherein the test information (PI) is in the form of a whitelist comprising hash values for the valid configuration descriptions (KB),
wherein the protected operating phase of the computer-implemented apparatus (100) is in the form of a first protected operating phase for providing the test information (PI) in advance on the computer-implemented apparatus (100) and/or in the form of a second protected operating phase for providing the test information (PI) at runtime of the computer-implemented apparatus (100) and in the form of a third protected operating phase for providing the test information (PI) on the basis of an information packet while the information packet is being installed, and
a testing unit (13) for testing the validity of a determined configuration description (KB) needing to be loaded into the reconfigurable part (11) of the digital chip (10), which configuration description is in the form of one of the admissible configuration descriptions (KB) that can be loaded into the reconfigurable part (11) of the digital chip (10) or
in the form of an inadmissible determined configuration description (KB) needing to be loaded into the reconfigurable part (11) of the digital chip (10), by comparing the determined configuration description (KB) needing to be loaded into the reconfigurable part (11) of the digital chip (10) with the test information (PI).

## Revendications

1. Procédé de vérification d'une validité de données pour un dispositif implémenté par ordinateur (100), qui comprend au moins un composant numérique (10) avec au moins une partie (11) reconfigurable grâce à au moins une description de configuration (KB), avec les étapes suivantes :
a) mise à disposition, pendant une phase d'exploitation protégée du dispositif implémenté par ordinateur (100), d'une information de vérification (PI) pour l'indication de descriptions de configuration (KB) admissibles pouvant être chargées dans la partie reconfigurable (11) du composant numérique (10), dans lequel l'information de vérification (PI) est conçue comme une liste blanche, qui comprend des valeurs de hachage des descriptions de configuration (KB) valides, dans lequel la phase d'exploitation protégée du dispositif implémenté par ordinateur (100) est conçue comme une première phase d'exploitation protégée pour la mise à disposition de l'information de vérification (PI) à l'avance sur le dispositif implémenté par ordinateur (100) et/ou comme une deuxième phase d'exploitation protégée pour la mise à disposition de l'information de vérification (PI) concernant le temps de fonctionnement du dispositif implémenté par ordinateur (100) et comme une troisième phase d'exploitation protégée pour la mise à disposition de l'information de vérification (PI) en fonction d'un paquet d'information pendant une installation du paquet d'information et
b) vérification de la validité d'une description de configuration (KB) déterminée à charger dans la partie reconfigurable (11) du composant numérique (10), qui est conçue comme une des descriptions de configuration (KB) admissibles pouvant être chargées dans la partie reconfigurable (11) du composant numérique (10) ou comme une description de configuration (KB) déterminée non-admissible à charger dans la partie reconfigurable (11) du composant numérique (10), grâce à une comparaison de la description de configuration (KB) déterminée à charger dans la partie reconfigurable (11) du composant numérique (10) avec l'information de vérification (PI).

2. Procédé selon la revendication 1,
**caractérisé en ce que**
la mise à disposition de l'information de vérification (PI) à l'avance sur le dispositif implémenté par ordinateur (100) comprend la mise à disposition de l'information de vérification (PI) lors de la fabrication ou lors de la mise en service du dispositif implémenté par ordinateur (100).

3. Procédé selon la revendication 2,
**caractérisé en ce que**
l'information de vérification (PI) est mise à disposition au moyen d'un processeur principal ou au moyen d'une mémoire non volatile ou sous la forme d'une partie d'un bitstream.

4. Procédé selon l'une des revendications 1 à 3,
**caractérisé en ce que**
la mise à disposition de l'information de vérification (PI) concernant le temps de fonctionnement du dispositif implémenté par ordinateur (100) comprend la mise à disposition de l'information de vérification (PI) pendant un processus d'amorce sécurisé ou pendant une mise à jour du firmware du dispositif implémenté par ordinateur (100).

5. Procédé selon la revendication 4,
**caractérisé en ce que**
l'information de vérification (PI) est mise à disposition au moyen d'un registre d'un processeur principal ou au moyen d'un composant logique du composant numérique (10).

6. Procédé selon l'une des revendications 1 à 5,
**caractérisé en ce que**
l'information de vérification (PI) est mise à disposition pendant la troisième phase d'exploitation protégée au moyen d'un registre d'un composant logique du composant numérique (10).

7. Procédé selon l'une des revendications 1 à 6,
**caractérisé en ce que**
l'information de vérification (PI) est mise à disposition en fonction d'un mode de fonctionnement du dispositif implémenté par ordinateur (100).

8. Procédé selon l'une des revendications 1 à 7,
**caractérisé en ce que**
l'information de vérification (PI) est mise à disposition en fonction d'au moins une condition déterminée du dispositif implémenté par ordinateur (100).

9. Procédé selon l'une des revendications 1 à 8,
**caractérisé en ce que**
après la vérification de la validité, à l'étape b), lors de la présence de la validité de la description de configuration (KB) déterminée à charger dans la partie reconfigurable (11) du composant numérique (10), une première action est exécutée, tandis que, lors de l'absence de la validité de la description de configuration (KB) déterminée à charger dans la partie reconfigurable (11) du composant numérique (10), une deuxième action est exécutée.

10. Procédé selon la revendication 9,
**caractérisé en ce que**
la première action comprend une autorisation de chargement de la description de configuration (KB) déterminée à charger dans la partie reconfigurable (11) du composant numérique (10).

11. Procédé selon la revendication 9 ou 10,
**caractérisé en ce que**
la deuxième action comprend la prévention de l'octroi d'une autorisation de chargement de la description de configuration (KB) déterminée à charger dans la partie reconfigurable (11) du composant numérique (10).

12. Procédé selon la revendication 9 ou 10,
**caractérisé en ce que**
la deuxième action comprend un refus d'accès à au moins un dispositif déterminé du dispositif implémenté par ordinateur (100) .

13. Procédé selon la revendication 9 ou 10,
**caractérisé en ce que**
la deuxième action comprend un retrait de la capacité d'échange d'une description de configuration (KB) sur le composant numérique (10).

14. Produit de programme informatique qui provoque, sur un dispositif contrôlé par un programme, l'exécution du procédé selon l'une des revendications 1 à 13.

15. Dispositif implémenté par ordinateur (100) pour le traitement de données, avec :
un composant numérique (10) avec au moins une partie reconfigurable (11) grâce à au moins une description de configuration (KB),
une unité de mise à disposition (12) pour la mise à disposition, pendant une phase d'exploitation protégée du dispositif implémenté par ordinateur (100), d'une information de vérification (PI) pour l'indication de descriptions de configuration (KB) admissibles pouvant être chargées dans la partie reconfigurable (11) du composant numérique (10), dans lequel l'information de vérification (PI) est conçue comme une liste blanche, qui comprend des valeurs de hachage des descriptions de configuration (KB) valides, dans lequel la phase d'exploitation protégée du dispositif implémenté par ordinateur (100) est conçue comme une première phase d'exploitation protégée pour la mise à disposition de l'information de vérification (PI) à l'avance sur le dispositif implémenté par ordinateur (100) et/ou comme une deuxième phase d'exploitation protégée pour la mise à disposition de l'information de vérification (PI) concernant le temps de fonctionnement du dispositif implémenté par ordinateur (100) et comme une troisième phase d'exploitation protégée pour la mise à disposition de l'information de vérification (PI) en fonction d'un paquet d'information pendant une installation du paquet d'information et
une unité de vérification (13) pour la vérification de la validité d'une description de configuration (KB) déterminée à charger dans la partie reconfigurable (11) du composant numérique (10), qui est conçue comme une des descriptions de configuration (KB) admissibles pouvant être chargées dans la partie reconfigurable (11) du composant numérique (10) ou comme une description de configuration (KB) déterminée non-admissible à charger dans la partie reconfigurable (11) du composant numérique (10), grâce à une comparaison de la description de configuration (KB) déterminée à charger dans la partie reconfigurable (11) du composant numérique (10) avec l'information de vérification (PI).
